## Europäisches Patentamt

## European Patent Office

## Office européen des brevets

(19)

(11) Numéro de publication: **0 166 657**
**B1**

(12)

# FASCICULE DE BREVET EUROPEEN

(45) Date de publication du fascicule du brevet:
**24.08.88**

(21) Numéro de dépôt: **85401228.3**

(22) Date de dépôt: **20.06.85**

(51) Int. Cl.⁴: **B 62 D 5/08**, B 62 D 5/30

(54) **Mécanisme de direction assistée compact.**

(30) Priorité: **27.06.84 ES 533744**

(43) Date de publication de la demande:
**02.01.86 Bulletin 86/1**

(45) Mention de la délivrance du brevet:
**24.08.88 Bulletin 88/34**

(84) Etats contractants désignés:
**DE FR GB IT**

(56) Documents cités:
**EP - A - 0 014 174**
**EP - A - 0 066 507**
**GB - A - 2 049 585**
**US - A - 3 602 326**
**US - A - 4 128 046**
**US - A - 4 186 818**
**US - A - 4 296 677**

(73) Titulaire: **BENDIX ESPANA S.A., Balmes 243,
Barcelona 6 (ES)**

(72) Inventeur: **Simon Bacardit, Juan, Calle
Mallorca 451, 6, 4a4, Barcelona 13 (ES)**

(74) Mandataire: **Le Moenner, Gabriel et al, Division
Technique Service Brevets Bendix Europe 126, rue de
Stalingrad, F-93700 Drancy (FR)**

## Description

La présente invention concerne les mécanismes de direction assistée, notamment pour véhicules automobiles, du type comprenant un boîtier, un premier piston coulissant de façon étanche dans un premier logement cylindrique du boîtier et délimitant une première paire de chambres d'actionnement opposées, le premier piston comportant intérieurement un moyen d'écrou coopérant avec une broche comportant une partie filetée, et reliée à un arbre d'entrée du mécanisme, et, extérieurement, un moyen de crémaillère engrenant avec un pignon de sortie du mécanisme supporté à rotation dans le boîtier, pour alimenter sélectivement en fluide sous pression les chambres de la première paire de chambres.

Un tel mécanisme de direction assistée est décrit notamment dans le document US-A-4 128 046, au nom de la demanderesse, et comporte un piston à double effet intégré dans le boîtier pour assister, dans l'un ou l'autre sens d'actionnement, l'effort transmis de l'arbre d'entrée au pignon de sortie, lui-même relié typiquement à un mécanisme d'embiellage d'orientation des roues directrices du véhicule.

Le besoin est apparu récemment, notamment pour des raisons de confort de conduite et d'économie d'énergie, de réaliser une modulation de l'assitance en fonction de certaines conditions d'utilisation et de roulement du véhicule. Il a ainsi été proposé de mettre sélectivement on œuvre deux pistons d'assistance, commandables séparément ou simultanément. De tels systèmes sont décrits notamment dans les documents US-A-3 602 326 et US-A-4 186 818. Dans ce dernier document, le système de direction assistée comporte un mécanisme compact du type général défini plus avant, ainsi qu'un cylindre d'assistance extérieur au boîtier du mécanisme compact. Cet agencement impose un couplage particulier du cylindre d'assistance extérieur au mécanisme d'embiellage d'orientation des roues ainsi que des canalisations additionnelles d'alimentation de ce cylindre d'assistance extérieur, ce qui complique notablement l'installation dans un véhicule et obère les coûts de fabrication et de montage, en induisant en outre des risques de défaillance supplémentaires.

La présente invention a pour objet de proposer un mécanisme de direction assistée à double assistance, de configuration ramassée, robuste, ne nécessitant pas de modifications particulières du véhicule destiné à être équipé d'un tel mécanisme, dans lequel un second piston d'assistance, couplé au premier piston d'assistance, est également disposé dans le boîtier du mécanisme.

Pour ce faire, selon l'invention, le mécanisme de direction assistée comporte un second piston, relié mécaniquement au premier piston et coulissant de façon étanche dans un second logement cylindrique du boîtier, coaxial au premier logement, et délimitant une seconde paire de chambres d'actionnement opposées séparées de façon étanche des chambres de la première paire de chambres, et une seconde paire de moyens de conduits, dans le boîtier, distincts des conduits de la première paire de moyens de conduits, pour alimenter sélectivement les chambres de la seconde paire de chambres.

La présente invention a pour autre objet de proposer un mécanisme de direction assistée compact tel que défini ci-dessus, de structure particulièrement compacte, à conception modulaire, de coûts de montage réduits et offrant une grande versatilité, dans lequel un moyen de valve de distribution double est également intégré dans le boîtier du mécanisme.

Pour ce faire, selon une caractéristique préférentielle de l'invention, le mécanisme comporte un moyen de valve de distribution, auquel sont reliées les premièr et seconde paires de moyens de conduits, actionnable par l'arbre d'entrée et comprenant une première et une seconde valves rotatives coaxiales à l'arbre d'entrée, disposées en tandem et reliées respectivement aux première et seconde paires de moyens de conduits, les deux valves rotatives étant avantageusement chacun du type à rotor plat en étoile.

D'autres caractéristiques et avantages de la présente invention ressortiront de la description suivante d'un mode de réalisation, donné à titre illustratif mais nullement limitatif, faite en relation avec les dessins annexés, sur lesquels:

– la Fig. 1 est une vue schématique en coupe longitudinale d'un mécanisme de direction assistée compact selon l'invention;

– les Fig. 2 et 3 sont des vues partielles des valves rotatives suivant les plans de coupe II–II et III–III; et

– les Fig. 4 et 5 sont des vues schématiques développées des valves rotatives des Fig. 2 et 3 montrant l'agencement des circuits de circulation de fluide dans ces dernières.

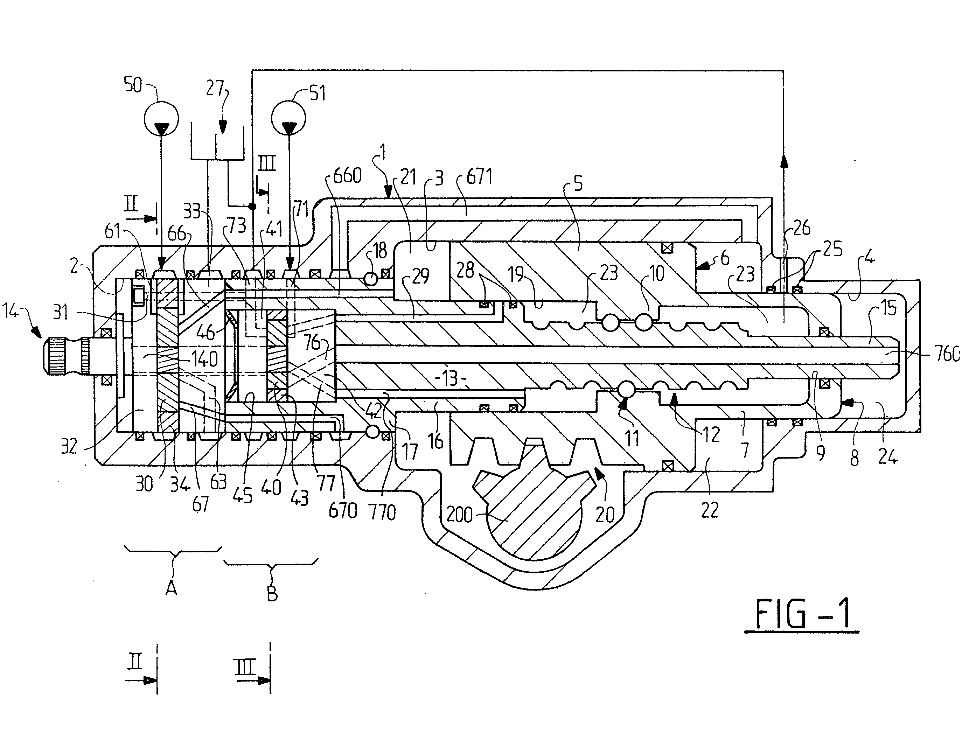

Le mécanisme de direction assistée compact représenté sur la Fig. 1 comprend un boîtier, désigné généralement par la référence 1, dans lequel sont formés successivement (de gauche à droite sur la Fig. 1), un premier alésage d'extrémité 2, un alésage central de plus grand diamètre 3 et un second alésage d'extrémité de diamètre réduit 4, l'alésage central 3 communiquant avec chacun des alésages d'extrémité 2 et 4. Dans l'alésage central 3 est monté à coulissement étanche un premier piston 5 d'une structure de piston, désignée généralement par la référence 6, comportant un prolongement d'extrémité annulaire de plus petit diamètre 7 reçu à coulissement étanche dans le second alésage d'extrémité 4 et comportant une paroi frontale d'extrémité formant second piston 8 pourvue d'un alésage central 9. La structure de piston 6 comporte intérieurement, au niveau du premier piston 5, une partie centrale de diamètre réduit 10 formant écrou à circulation de billes 11 coopérant avec une partie intermédiaire filetée 12 d'une broche longitudinale centrale 13 actionnable en rotation, dans le boîtier, par un arbre d'entrée 14 du mécanisme destiné à être relié à un volant de direction d'un véhicule automobile.

Selon un aspect de l'invention, la broche 13 comporte une extrémité de diamètre réduit 15 s'étendant à coulissement étanche au travers de l'alésage 9 du second piston 8, une portion intermédiaire de plus grand diamètre à surface périphérique lisse 16 du côté de la partie filetée 12 opposée au prolongement d'extrémité 15, et une partie d'extrémité de plus grand diamètre encore 17 à l'opposé du prolongement d'extrémité 15, montée à rotation étanche dans le premier alésage d'extrémité 2 du boîtier 1 en étant immobilisée axialement par une liaison à billes 18. La partie intermédiaire de diamètre élargi 16 est reçue à coulissement étanche dans un alésage central 19 du premier piston 5. Ce dernier comporte, de façon classique, sur une portion de sa périphérie, une partie de crémaillère rectiligne 20 coopérant en engrènement avec un pignon de sortie 200 monté à rotation dans le boîtier 1 et destiné typiquement à être relié à un mécanisme d'embiellage d'orientation de roues directrices du véhicule (non représenté).

On comprendra que, dans l'agencement qui vient d'être décrit, le premier piston 5 délimite, avec la broche 13, dans l'alésage central 3, une première paire de chambres annulaires 21 et 22, tandis que le second piston 8 délimite, avec la broche 13 et le boîtier 1, deux chambres opposées d'une seconde paire de chambres, à savoir une chambre intérieure annulaire 23, de part et d'autre de la partie centrale d'écrou 10, délimitée à son autre extrémité par la partie intermédiaire de diamètre agrandi 16 de la broche 13, et une chambre d'extrémité 24 délimitée par ailleurs, dans l'alésage d'extrémité 4, par le fond du boîtier fermant cet alésage 4, les diverses chambres étant isolées les unes des autres. Comme on le voit sur la Fig. 1, de préférence, le prolongement d'extrémité 7 de la structure de piston 6 est étanchéifié vis-à-vis de l'alésage 4 par une paire de joints annulaires 25 portés par le boîtier 1, séparant ainsi de façon étanche la chambre 22 de la chambre 24, et d'entre lesquels part une conduite de compensation 26 destinée à être reliée à un réservoir 27, comme on le vrea plus loin. De façon similaire, l'alésage 19 du premier piston 5 est étanchéifié vis-à-vis de la partie intermédiaire 16 de la broche 13 au moyen d'une paire de joints 28, isolant ainsi l'une de l'autre les chambres 21 et 23, et d'entre lesquels part une conduite de compensation 29 destinée à être reliée au réservoir 27.

Selon un aspect de l'invention, le mécanisme comporte un moyen de valve de distribution double constitué d'un premier ensemble de valve de distribution A et d'un second ensemble de valve de distribution B disposés en tandem dans le boîtier 1 et actionnables en séquence par l'arbre d'entrée 14. Les deux ensembles de valves de distribution A et B peuvent être du type à rotor cylindrique et à douille périphérique également cylindrique du type décrit dans le document US-A-4 128 046 sus-mentionné. Toutefois, pour une plus grande compacité axiale du mécanisme, chaque ensemble de valve de distribution A et B est de préférence du type dit à rotor plat en étoile tel que décrit notamment dans les documents US-A-4 217 932 et US-A-4 320 780, au nom de la demanderesse, dont les contenus sont supposés intégrés ici pour référence.

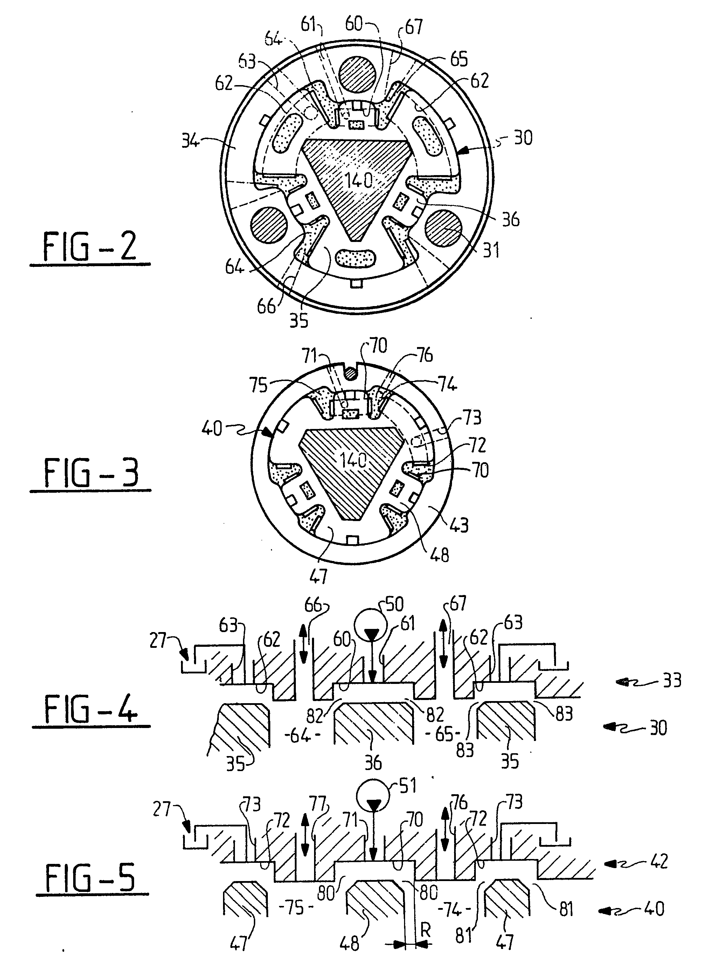

Conformément à l'enseignement de ces deux derniers documents, le premier ensemble de valve de distribution rotative A comporte, comme on le voit également sur la Fig. 2 un rotor en étoile 30, monté à rotation étanche dans une chambre intérieure d'un stator constitué par l'assemblage, au moyen de vis tel que 31, de deux éléments d'extrémité annulaires 32 et 33 et d'une entretoise annulaire 34. De façon similaire, le second ensemble de valve de distribution rotative B comporte un rotor en étoile 40 monté à rotation étanche dans une cavité annulaire d'un stator constitué de l'empilage de deux éléments d'extrémité annulaires 41 et 42 et d'une entretoise annulaire 43. Selon un aspect de l'invention, le stator du premier ensemble de valve A est monté à rotation dans le premier alésage d'extrémité 2 du boîtier 1 tandis que le stator du second ensemble de valve B est emmanché dans un alésage 45 de la partie d'extrémité de plus grand diamètre 17 de la broche 13, les éléments constitutifs (41, 42, 43) de ce stator étant maintenus axialement plaqués les uns contre les autres par une rondelle élastique 46 interposée entre l'élément d'extrémité 33 du stator du premier ensemble de valve A et l'élément d'extrémité adjacent 41 du stator du second ensemble de valve B. Les rotors 30 et 40 sont solidarisés sans jeu angulaire avec une partie de prolongement triangulaire 140 de l'arbre d'entrée 14 traversant avec un jeu angulaire des ouvertures centrales correspondantes des éléments d'extrémité 32, 33 et 41, 42 des ensembles de valves A et B.

Dans le mode de réalisation représenté, le pre-mier ensemble de valve A, ou valve primaire est une valve à rotor en étoile à réaction hydraulique, tandis que le second ensemble de valve B, ou valve secondaire, est une valve à rotor en étoile sensiblement sans réaction hydraulique. En variante, les deux ensembles de valves pourraient être du type sans réaction hydraulique mais avec réaction assurée, au moins pour le premier ensemble de valve, par une paire de ressorts en C, comme décrit dans le document EP-A-0 077 710 au nom de la demanderesse. Quels que soient les modes de réalisation particuliers des valves à rotor en étoile, de façon connue, les bras des rotors en étoile définissent avec les ouvertures formées dans les faces en regard des éléments d'extrémité du stator des restrictions variables en fonction de la relation relative du rotor par rapport au stator, permettant une distribution sélective vers des circuits afférents d'une pression modulée en provenance d'une source de pression débitant normalement au travers de la valve de distribution vers un réservoir 27. Dans l'agencement selon la présente invention, au premier ensemble de valve A est associée une première source de pression ou pompe 50 tandis qu'au second ensemble de valve B est associée une seconde source de pression ou pompe 51, typiquement de capacité inférieure à la capacité de la source de pression 50, ou, option- nellement, fonctionnant de façon intermittente en fonction de paramètres de marche du véhicule. Dans le mode de réalisation représenté, le rotor 30 du premier ensemble de valve A comporte trois bras principaux 35, assurant la réaction hydraulique, et trois bras courts 36 assurant essentiellement la distribution du fluide sous pression en coopérant avec des ouvertures d'admission 60 du stator reliées à la source de pression 50 par des conduits d'amenée 61, les bords des bras principaux 35 coopérant avec des ouvertures 62 du stator reliées au réservoir 27 par des conduits 63. Entre chaque bras court 36 et les bras principaux adjacents 35 est définie une paire de chambres de distribution 64 et 65, reliées respectivement, par des conduits 66 et 67, formés dans l'élément du stator 33, et des conduits correspondants 660 et 670 formés dans la partie d'extrémité du diamètre élargie 17 de la broche 13, aux chambres 21 et 22 du premier piston 5, le conduit 670 de la chambre opposée 22 se prolongeant par un conduit 671 formé dans le corps du boîtier 1. De façon similaire le rotor 40 du second ensemble de valve B comporte des bras principaux 47 et des bras courts 48. Ces derniers coopèrent avec des ouvertures d'admission 70 reliées par des conduits 71 à la source de pression 51, les bras principaux 47 coopérant avec des ouvertures de sortie 72 reliées au réservoir 27 par des conduits 73. Les chambres de distribution 74 et 75 de l'ensemble de valve secondaire B sont respectivement reliées, par des conduits 76 et 77 formés dans l'élément de stator 42 et communiquant avec des conduits 760 et 770 formés dans la broche 13, avec les chambres 24 et 23 du second piston 8.

Comme on le voit sur les Fig. 4 et 6, pour assurer une mise en œuvre séquentielle des deux valves A et B, c'est-à-dire, en pratique, pour n'actionner la valve secondaire B qu'après une rotation substantielle de l'arbre d'entrée 14, correspondant par exemple à des conditions de parcage du véhicule, les bras 36 et 35 et les cavités correspondantes 60 et 62 du premier ensemble de valve A sont dimensionnés vis-à-vis des bras 48 et 47 et les cavités correspondantes 70 et 72 du second ensemble de valve B de telle sorte que les restrictions de distribution 80 (ainsi que les restrictions de commande de décharge 81) du second ensemble de valve B soient supérieures d'une valeur R aux restrictions correspondantes 82 et 83 du premier ensemble de valve A mises en œuvre immédiatement pour chaque rotation de l'arbre d'entrée 14 de sorte que, en dehors de ces manœuvres de parcage ou pour prendre des courbes accentuées, l'assistance s'effectue essentiellement par le premier piston 5, dont les chambres 21 et 22 sont alimentées à partir de la première source de pression 50, le second piston 8, dont les chambres 23 et 24 sont alimentées en provenance de la seconde source de pression 51 de capacité réduite, n'intervenant qu'occasionnellement pour suppléer l'assistance fournie par le premier piston 5. En variante, pour assurer le fonctionnement séquentiel des ensembles de valves A et B, on peut prévoir un accouplement à course morte entre l'arbre d'entrée 140 et le rotor 40 du second ensemble de valve.

Quoique la présente invention ait été décrite en relation avec un mode de réalisation particulier, elle ne s'en trouve pas limitée mais est au contraire susceptible de modifications et de variantes qui apparaîtront à l'homme de l'art.

**Revendications**

1. Mécanisme de direction assistée compact, comprenant un boîtier (1), un premier piston (5) coulissant de façon étanche dans un premier logement cylindrique (3) du boîtier et délimitant une première paire de chambres d'actionnement opposées (21, 22), le premier piston comportant intérieurement un moyen d'écrou (10) coopérant avec une broche (13) comportant une partie filetée (12) et reliée à un arbre d'entrée (14) du mécanisme, et, extérieurement, un moyen de crémaillère (20) engrenant avec un pignon de sortie (200) du mécanisme supporté à rotation dans le boîtier (1), et une première paire de moyens de conduits (660; 670, 671), dans le boîtier, pour alimenter sélectivement en fluide sous pression les chambres de cette première paire de chambres, caractérisé en ce qu'il comprend un second piston (8), relié mécaniquement au premier piston (5) et coulissant de façon étanche dans un second logement cylindrique (4) du boîtier (1), coaxial au premier logement (3), et délimitant une seconde paire de chambres d'actionnement opposées (23, 24) séparées de façon étanche des chambres (21, 22) de la première paire de chambres, et une seconde paire de moyens de conduits (760, 770), dans le boîtier, distincts de la première paire de moyens de conduits pour alimenter sélectivement en fluide sous pression les chambres de la seconde paire de chambres.

2. Mécanisme selon la revendication 1, caractérisé en ce que le second piston (8) est annulaire et coulisse intérieurement de façon étanche sur un prolongement d'extrémité cylindrique lisse (15) de la broche (13), la seconde paire de moyens de conduits (760, 770) étant formée dans la broche (13).

3. Mécanisme selon la revendication 2, caractérisé en ce que le premier piston (5) coulisse intérieurement de façon étanche sur une zone intermédiaire cylindrique lisse de diamètre agrandi (16) de la broche (13) opposée au prolongement d'extrémité (15) par rapport à la partie filetée (12) de la broche.

4. Mécanisme selon la revendication 2 ou la revendication 3, caractérisé en ce que le second piston (8) est constitué par un prolongement d'extrémité tubulaire (7) du premier piston (5) opposé à l'arbre d'entrée (14), le second logement (4) du boîtier (1) étant espacé axialement du premier logement (3) du boîtier.

5. Mécanisme selon la revendication 4, caractérisé en ce que le prolongement d'extrémité (15) de la broche (13) a un diamètre réduit par rapport à la partie filetée (12), le second logement (4) du boîtier (1) ayant un diamètre inférieur à celui du premier logement (3).

6. Mécanisme selon l'une des revendications 2 à 5, caractérisé en ce qu'il comporte un moyen de valve de distribution (A, B) disposé dans le boîtier (1), actionnable par l'arbre d'entrée (14) et communiquant avec les conduits des premières et seconde paires de moyens de conduits.

7. Mécanisme selon la revendication 6, caractérisé en ce que le moyen de valve de distribution comprend une première (A) et une seconde (B) valves rotatives coaxiales à l'arbre d'entrée (14), disposées en tandem et reliées respectivement aux première et seconde paires de moyens de conduits.

8. Mécanisme selon la revendication 7, caractérisé en ce que les première (A) et seconde (B) valves rotatives sont chacune du type à rotor plat en étoile (30, 40).

9. Mécanisme selon la revendication 8, caractérisé en ce que la première valve (A) est disposée dans un alésage (2) du boîtier (1), la seconde valve (B) étant disposée dans un alésage (45) d'une extrémité de diamètre élargie (17) de la broche (13) montée à rotation dans cet alésage (2) du boîtier.

10. Mécanisme selon la revendication 9, caractérisé en ce que les moyens de conduits (660, 670) de la première paire sont formés au moins partiellement dans l'extrémité de diamètre élargi (17) de la broche (13).

11. Mécanisme selon l'une des revendications 7 à 10, caractérisé en ce qu'il comprend des moyens de raccordement de chaque valve (A, B) à une source de pression associée (50, 51).

12. Mécanisme selon la revendication 11, caractérisé en ce que les sources de pression (50, 51) sont des pompes de capacités différentes.

**Patentansprüche**

1. Kompakter Servolenkungsmechanismus mit einem Gehäuse (1), einem ersten Kolben (5), der in einer ersten zylindrischen Lagerfläche (3) des Gehäuses abgedichtet gleitet und ein erstes Paar entgegengerichteter Betätigungskammern (21, 22) begrenzt, wobei der erste Kolben innen eine Mutter (10) und aussen eine Zahnstange (20) aufweist, von denen die Mutter mit einer Spindel (13) zusammenwirkt, die einen Gewindeabschnitt (12) aufweist und mit einer Eingangswelle (14) des Mechanismus verbunden ist, und die Zahnstange mit einem Ausgangsritzel (200) des Mechanismus in Eingriff steht, das im Gehäuse (1) drehbar gelagert ist, und einem im Gehäuse angeordneten ersten Leitungspaar (660, 670, 671) zur wahlweisen Druckmittelbeaufschlagung der Kammern des ersten Kammerpaares, gekennzeichnet durch einen zweiten Kolben (8), der mit dem ersten Kolben (5) mechanisch verbunden ist und in einer zur ersten Lagerfläche (3) koaxialen zylindrischen zweiten Lagerfläche (4) des Gehäuses (1) abgedichtet gleitet, und der ein zweites Paar entgegengerichteter Betätigungskammern (23, 24) begrenzt, die von den Kammern (21, 22) des ersten Kammerpaares abgedichtet getrennt sind, und ein im Gehäuse angeordnetes zweites Paar vom ersten Leitungspaar entfernter Leitungen (760, 770) zur wahlweisen Druckmittelbeaufschlagung der Kammern des zweiten Kammerpaares.

2. Mechanismus nach Anspruch 1, dadurch gekennzeichnet, dass der zweite Kolben (8) ringförmig ist und innen abgedichtet auf einer glatten zylindrischen Verlängerung (15) der Spindel (13) gleitet, wobei das zweite Leitungspaar (760, 770) in der Spindel (13) gebildet ist.

3. Mechanismus nach Anspruch 2, dadurch gekennzeichnet, dass der erste Kolben (5) innen auf einem glatten zylindrischen Zwischenbereich (16) vergrösserten Durchmessers der Spindel (13) abgedichtet gleitet, welcher bezüglich des Gewindeabschnitts (12) der Spindel entgegengerichtet zur Verlängerung (15) angeordnet ist.

4. Mechanismus nach Anspruch 2 oder 3, dadurch gekennzeichnet, dass der zweite Kolben (8) von einer rohrförmigen Verlängerung (7) des ersten Kolbens (5) gebildet wird, die von der Eingangswelle (14) abgewandt ist, wobei die zweite Lagerfläche (4) des Gehäuses (1) von der ersten Lagerfläche (3) des Gehäuses axial beabstandet ist.

5. Mechanismus nach Anspruch 4, dadurch gekennzeichnet, dass die Verlängerung (15) der Spindel (13) einen verringerten Durchmesser bezüglich des Gewindeabschnitts (12) hat, wobei die zweite Lagerfläche (4) des Gehäuses (1) einen kleineren Durchmesser als die erste Lagerfläche (3) hat.

6. Mechanismus nach einem der Ansprüche 2–5, gekennzeichnet durch eine Verteilerventileinrichtung (A, B), die in dem Gehäuse (1) angeordnet ist, von der Eingangswelle (14) betätigt wird und mit den Leitungen des ersten und zweiten Leitungspaares in Verbindung steht.

7. Mechanismus nach Anspruch 6, dadurch gekennzeichnet, dass die Verteilerventileinrichtung ein erstes Drehventil (A) und ein zweites Drehventil (B) aufweist, die in Tandem-Anordnung koaxial zur Eingangswelle (14) angeordnet und mit dem ersten bzw. zweiten Leitungspaar verbunden sind.

8. Mechanismus nach Anspruch 7, dadurch gekennzeichnet, dass das erste (A) und das zweite (B) Drehventil als Ventil mit sternförmiger Rotorscheibe (30, 40) ausgebildet sind.

9. Mechanismus nach Anspruch 8, dadurch gekennzeichnet, dass das erste Ventil (A) in einer Bohrung (2) des Gehäuses (1) angeordnet ist, während das zweite Ventil (B) in einer Bohrung (45) eines durchmesservergrösserten Endes (17) der Spindel (13) angeordnet ist, das in dieser Bohrung (2) des Gehäuses drehbar gelagert ist.

10. Mechanismus nach Anspruch 9, dadurch gekennzeichnet, dass die Leitungen (660, 670) des ersten Leitungspaares zumindest teilweise in dem durchmesservergrösserten Ende (17) der Spindel (13) gebildet sind.

11. Mechanismus nach einem der Ansprüche 7–10, dadurch gekennzeichnet, dass er Verbindungsmittel zur Verbindung jedes Ventils (A, B) mit einer zugehörigen Druckquelle (50, 51) aufweist.

12. Mechanismus nach Anspruch 11, dadurch gekennzeichnet, dass die Druckquellen (50, 51) Pumpen unterschiedlicher Kapazität sind.

## Claims

1. Compact assisted steering mechanism, comprising a casing (1), a first piston (5) sliding in a sealed manner in a first cylindrical housing (3) of the casing and defining a first pair of opposed actuating chambers (21, 22), the first piston incorporating internally a nut means (10) co-operating with a spindle (13) incorporating a threaded portion (12) and connected to an input shaft (14) of the mechanism, and externally, a rack means (20) meshing with an output pinion (200) of the mechanism supported so as to rotate in the casing (1), and a first pair of passage means (660; 670, 671), in the casing, to supply selectively the chambers of this first pair of chambers with fluid under pressure, characterized in that it comprises a second piston (8), connected mechanically to the first piston (5) and sliding in a sealed manner in a second cylindrical housing (4) of the casing (1), which is coaxial with the first housing (3), and defining a second pair of opposed actuating chambers (23, 24) separated in a sealed manner from the chambers (21, 22) of the first pair of chambers, and a second pair of passage means (760, 770), in the casing, distinct from the first pair of passage means to supply selectively the chambers of the second pair of chambers with fluid under pressure.

2. Mechanism according to Claim 1, characterized in that the second piston (8) is annular and slides internally in a sealed manner on a smooth cylindrical end extension (15) of the spindle (13), the second pair of passage means (760, 770) being formed in the spindle (13).

3. Mechanism according to Claim 2, characterized in that the first piston (5) slides internally in a sealed manner upon a smooth cylindrical intermediate zone of enlarged diameter (16) of the spindle (13) remote from the end extension (15) relative to the threaded portion (12) of the spindle.

4. Mechanism according to Claim 2 or Claim 3, characterized in that the second piston (8) consists of a tubular end extension (7) of the first piston (5) remote from the input shaft (14), the second housing (4) of the casing (1) being axially spaced from the first housing (3) of the casing.

5. Mechanism according to Claim 4, characterized in that the end extension (15) of the spindle (13) has a reduced diameter relative to the threaded portion (12), the second housing (4) of the casing (1) having a diameter which is less than that of the first housing (3).

6. Mechanism according to one of Claims 2 to 5, characterized in that it incorporates a distribution valve means (A, B) situated in the casing (1), capable of being actuated by the input shaft (14) and communicating with the passages of the first and second pairs of passage means.

7. Mechanism according to Claim 6, characterized in that the distribution valve means incorporates a first rotary valve (A) and a second rotary valve (B) which are coaxial with the input shaft (14), which are situated in tandem and are connected to the first and second pairs of passage means, respectively.

8. Mechanism according to Claim 7, characterized in that the first rotary valve (A) and the second rotary valve (B) are both of the type having a flat star-shaped rotor (30, 40).

9. Mechanism according to Claim 8, characterized in that the first valve (A) is situated in a bore (2) of the casing (1), the second valve (B) being situated in a bore (45) in an end of enlarged diameter (17) of the spindle (13) which is mounted so as to rotate in this bore (2) of the casing.

10. Mechanism according to Claim 9, characterized in that the passage means (660, 670) of the first pair are formed at least partially in the end of enlarged diameter (17) of the spindle (13).

11. Mechanism according to one of Claims 7 to 10, characterized in that it comprises means for connecting each valve (A, B) to an associated source of pressure (50, 51).

12. Mechanism according to Claim 11, characterized in that the sources of pressure (50, 51) are pumps of different capacities.

FIG-1

2 / 2

FIG-2

FIG-3

FIG-4

FIG-5